# EUROPEAN PATENT SPECIFICATION

(11) **EP 2 579 429 B1**
(45) Date of publication and mention of the grant of the patent: **25.04.2018**
(21) Application number: 11789607.6
(22) Date of filing: 17.05.2011
(51) Int. Cl.: H02K 1/18, H02K 1/14

(54) **ROTARY ELECTRIC MACHINE, AND STATOR FOR ROTARY ELECTRIC MACHINE**
ROTIERENDE ELEKTRISCHE MASCHINE UND STATOR FÜR EINE ROTIERENDE ELEKTRISCHE MASCHINE
MACHINE ÉLECTRIQUE TOURNANTE ET STATOR POUR MACHINE ÉLECTRIQUE TOURNANTE

(30) Priority: 02.06.2010 JP 2010126806
(43) Date of publication of application: 10.04.2013
(73) Proprietor: AISIN SEIKI KABUSHIKI KAISHA, Kariya-shi, Aichi 448-8650 (JP)
(72) Inventor: SATO Tomohiro, Kariya-shi, Aichi 448-8650 (JP)
(74) Representative: Winter, Brandl, Fürniss, Hübner, Röss, Kaiser, Polte - Partnerschaft mbB
(86) International application number: PCT/JP2011/061258
(87) International publication number: WO 2011/152198

(56) References cited:
- WO-A1-2007/107131
- JP-A- 2002 186 204
- JP-A- 2002 186 204
- JP-A- 2005 051 941
- JP-A- 2008 104 325
- JP-A- 2010 114 951
- US-A1- 2004 189 137

## Description

### TECHNICAL FIELD

The present invention relates to a rotary electric machine in which a rotor is driven by the passage of an electric current through a stator core, and also to a stator for a rotary electric machine.

### BACKGROUND OF THE TECHNOLOGY

The related art includes a technology regarding a rotary electric machine comprising a stator formed with a plurality of cores, each of which is wound with a coil, are held in an inner circumferential surface of a holding ring in the form of an annular shape and a rotor formed in a manner radially facing the stator (for example, refer to JP-B-3666727). This machine is used mainly as a wheel-driving motor for a hybrid vehicle, and is formed by press-fitting the plural cores to the inner circumferential surface of the holding ring while keeping the cores arranged in an annular shape, and then attaching the holding ring to the inside of the motor housing.

Further, WO 2007/107131 A1 also discloses a stator for an electric motor and method for the production thereof. The stator has a stator core which is surrounded by a housing and whose surface that faces the housing inner wall is provided with at least one depression, the outer edge of which engages with the housing inner wall.

Another armature of rotating electric machine is disclosed in US 2004/0189137 A1. The armature has a plurality of first magnetic teeth arranged side by side along a circumferential direction of the rotating electric machine and a plurality of second magnetic teeth joined to the first magnetic teeth. A pair of joint portions is formed at both end surfaces of a yoke portion of each first magnetic tooth, the joint portions formed at the facing end surfaces of the yoke portions of each successive pair of adjacent first magnetic teeth together forming a connecting part, whereas a mating part is formed at an outer end surface of each second magnetic tooth. Each second magnetic tooth is inserted between the adjacent first magnetic teeth along an axial direction of the rotating electric machine with the mating part fitted on the connecting part to interconnect the adjacent first magnetic teeth.

JP 2002 186204 A discloses a stator for dynamo-electric machines that is constituted of a stator frame and a stator core fixed on the stator frame. The outer periphery of the cross section of the stator frame in the orthogonal direction to the axial one is formed into sinusoidal waveforms of odd number except one. Another split stator core is disclosed by JP 2005 051941 A such that cuts are formed at the parting planes of split yokes, whereby projection parts in the shape of projections are made. Then, the projection parts are abutted to each other, whereby a gap is made in a main magnetic flux region. Hereby, the compressive stress in the main magnetic flux region can be zeroed, so this stator core can suppress the occurrence of iron loss due to the compressive stress in the main magnetic flux region.

### SUMMARY OF THE INVENTION

### PROBLEMS TO BE SOLVED BY THE INVENTION

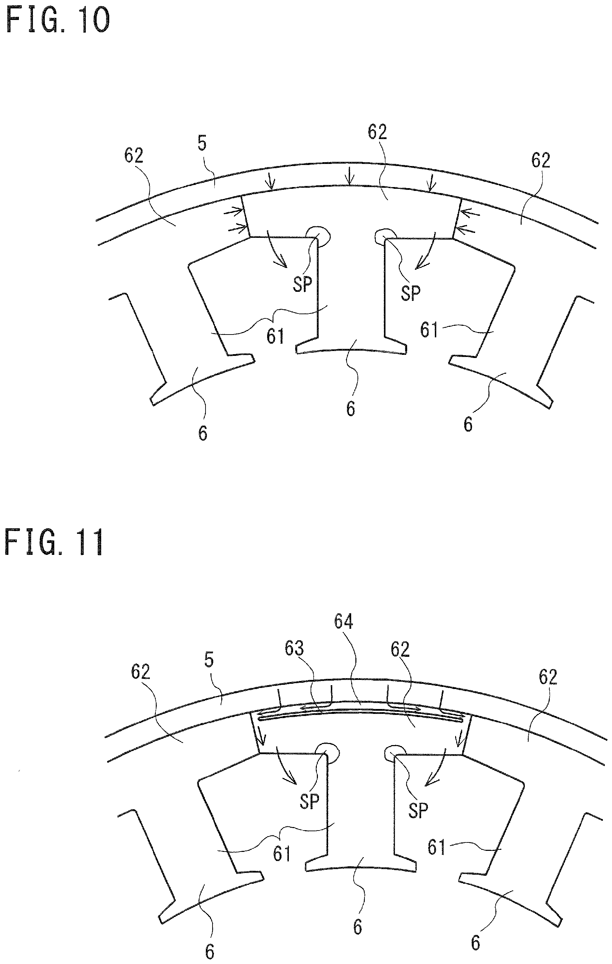

Fig. 10 shows a state of stress, in a case where cores are arrayed in an annular shape and then attached to the inner circumferential surface of a holding ring 5 of a stator, that is generated in each of the core teeth 6 included in the respective cores. Each of the core teeth 6 includes a tooth portion 61 around which a coil (not shown in Figs. 10 and 11) is wound and a back yoke portion 62 connected to the radially outward side of the tooth portion 61. The core teeth 6 that are adjacent to each other are press-fitted to the inner circumferential surface of the holding ring 5 with circumferential ends of the respective back yoke portions 62 of these core teeth 6 being abutted against each other.

As shown in Fig. 10, as a result of the press-fitting of the core teeth 6 to the holding ring 5, the outer circumferential surface of each of the back yoke portions 62 receives, from the holding ring 5, pressing force (surface pressure) that radially inwardly acts thereon in an approximately uniform manner. Additionally, opposite ends of the back yoke portion 62 receive, from the back yoke portions 62 of the adjacent core teeth 6, pressing force that circumferentially acts thereon. Consequently, the respective opposite ends of the back yoke portion 62 have no direction to be able to move, and moments that radially inwardly act thereon are more likely to occur.

Normally, the tooth portion 61 of the core tooth 6 is formed so as to have stiffness of a predetermined level or higher. Therefore, compressional stress is more likely to occur in juncture portions SP (shown in Fig. 10) between the tooth portion 61 and the back yoke portion 62 due to the moments generated at the opposite ends of the back yoke portion 62, as described above. Each of the core teeth 6 is formed by laminating a large number of thin electromagnetic steel plates. Consequently, so-called buckling of the core teeth 6, which means a state where some of the electromagnetic steel plates thereof have become bent in the axial direction of the stator, is brought about when the stress having occurred is excessive.

Further, the stress having occurred in the core tooth 6 increases iron loss (iron loss due to stress) inside the core tooth 6, thereby reducing the efficiency of the rotary electric machine.

One method for suppressing buckling of the core tooth 6, that is attributable to the attachment thereof to the holding ring 5, is probably to have an arc-like slit 63 penetrating the back yoke portion 62 as shown in Fig. 11. This method makes it possible to suppress buckling of the core tooth 6 to some extent because the slit 63 formed in the back yoke portion 62 serves as a buffering part against the surface pressure from the holding ring 5.

However, the slit 63 is not formed at the opposite ends of the back yoke portion 62, and this allows surface pressure applied to the outer circumferential surface of the back yoke portion 62 to be transmitted directly to these ends. Furthermore, surface pressure applied to the central part of the back yoke portion 62 is transmitted to these ends through a bridge portion 64 located on the outward side of the slit 63. Therefore, as in the above described case, compressional stress occurs on the juncture portions SP between the tooth portion 61 and the back yoke portion 62 due to the moments generated at the opposite ends of the back yoke portion 62 (as shown in Fig. 11).

Alternatively, instead of the above described press-fitting at room temperature, shrink-fitting is usable as a method for immovably attaching the row of cores to the holding ring. In this method, the row of cores is immovably attached to the holding ring in such a manner that, after the row of cores is fitted to the holding ring with the holding ring being heated and expanded in inner diameter, the holding ring is then cooled down and shrunk in inner diameter.

However, in a case where an interference between the holding ring and the array of cores is large after cooling, this method has been the same as press-fitting in that the electromagnetic steel plates are likely to buckle due to surface pressure applied to the outer circumferential surface.

Firmly attaching the cores to the holding ring requires the interference (the outer diameter of each of the cores minus the inner diameter of the holding ring) between each of the cores and the holding ring to be not smaller than a predetermined size. Here, the larger the interference is, the larger the stress generated in the core. That is, firmly holding the cores at the holding ring, and buckling of the core teeth have been problems that cannot be solved at the same time.

The related art includes a technology intended to suppress the so far described buckling of the cores by forming a plurality of through-holes in a circular cylindrical portion of the holding ring (refer to JP-A-2008-86172). This makes the holding ring radially expandable because of the through-holes formed in the holding ring, thereby enabling reduction of surface pressure applied to the cores from the holding ring.

On the other hand, however, formation of the through-holes makes the physical strength of the holding ring more likely to decrease. Furthermore, a process of forming the plural through-holes in the holding ring is required, which increases the production cost of the holding ring.

Still another method for immovably attaching the cores to the holding ring has been proposed which aims at relieving stress generated in the cores but does not involve a press-fitting or shrink-fitting process (refer to JP-A-2008-125333). This method is such that, with recessed portions formed on the outer circumferential surfaces of the back yoke portions of the respective cores, and also with plural through-holes formed in the holding ring at positions corresponding to the recessed portions, the cores are immovably attached to the holding ring in such a manner that pins are press-fitted to the through-holes and to the recessed portions.

However, this method requires a process of forming the recessed portions and the through-holes in the cores and the holding ring, and requires the pins to be press-fitted to the cores and the holding ring. Therefore, the number of parts inevitably increases, and increase of the production cost is inevitable.

The present invention was made in view of the above reasons, and aims at providing a rotary electric machine and a stator for a rotary electric machine that use simple configurations to suppress damage caused to the core teeth due to surface pressure from the holding ring.

### MEANS FOR SOLVING THE PROBLEM

In order to solve the above described problems, the stator of the invention according to claim 1 includes a holding ring including a circular cylindrical portion and being attached to the housing. And the stator includes a plurality of core teeth around each of which a coil is wound and which are arranged in an annular shape and attached through press-fitting or shrink-fitting to the inner circumferential surface of the circular cylindrical portion. Each of the plurality of core teeth includes a tooth portion which radially extends in a state where the core tooth is attached to the holding ring and around which the coil is wound, and a back yoke portion which is connected to the radially outward side of the tooth portion and circumferentially extends. The plurality of core teeth, when being attached to the holding ring, are arranged in an annular shape with ends of the back yoke portions of each adjacent ones thereof abutted against each other. The outer circumferential surface of each of the back yoke portions includes a protruded portion at the circumferential center thereof and includes recessed portions at opposite circumferential ends thereof, the protruded portion being protruded radially outwardly from a reference circle formed to be located a predetermined distance apart from the axial center of the stator, the recessed portion being recessed radially inwardly from the reference circle. Each of the protruded portion and the recessed portion is formed of a sine curve or a cosine curve and in each of the core teeth, a radial distance from the reference circle to the protruded portion is equal to a radial distance from the reference circle to each of the recessed portions.

The structure of the invention according to claim 2 is such that in claim 1, in the outer circumferential surface of the back yoke portion, the protruded portion is smoothly protruded radially outwardly, and each of the recessed portions is smoothly recessed radially inwardly, so that the protruded portion and the recessed portions are smoothly connected to each other.

The structure of a rotary electric machine of the invention according to claim 3 includes a rotor rotatably attached to a housing, and a stator according to claim 1 or 2 which is provided in a manner facing the radially outward side of the rotor, the holding ring of said stator being attached to the housing..

The structure of the invention according to claim 4 is such that the rotary electric machine according to claim 3, each of the core teeth includes a slit in a part thereof located a predetermined distance radially inwardly apart from the outer circumferential surface of the back yoke portion, the slit extending circumferentially and penetrating the back yoke portion in the axial direction.

Further, the structure of the rotary electric machine of the invention is such that, the average value of radial lengths from the axial center of the stator to the outer circumferential surface of the back yoke portion is equal to the radial length of the reference circle.

### EFFECTS OF THE INVENTION

The outer circumferential surface of each of the back yoke portions has a protruded portion at the circumferential center thereof and has recessed portions at the opposite circumferential ends thereof, the protruded portion being protruded radially outwardly from a reference circle formed to be located a predetermined distance apart from the axial center of the stator, the recessed portion being recessed radially inwardly from the reference circle.

Therefore, the magnitudes of surface pressure that the circumferential center of the back yoke portion receives from the holding ring can be sustained and the surface pressure that the opposite ends of the back yoke portion receive from the holding ring can be reduced at the same time. Consequently, moments radially outwardly acting on the opposite ends of the back yoke portion are generated, and this makes it possible to reduce the above described moments radially inwardly acting thereon. This makes it possible to reduce stress in juncture portions between the back yoke portion and the tooth portion, and thereby prevent buckling of the core tooth.

That is, it is possible to simultaneously achieve sustainment of the retaining force of the holding ring for holding the core teeth and suppression of buckling of core teeth.

Additionally, reduction of stress generated in the core teeth is enabled, which makes it possible to reduce iron loss due to stress in the core teeth and thereby increase the efficiency of the rotary electric machine.

Furthermore, the outer circumferential surface of the back yoke portion including the protruded portion and the recessed portions enables simplified formation thereof using press-molding or the like, and does not involve increase in number of parts, whereby a rotary electric machine is made available at low cost. Forming the protruded portion and the recessed portions by using a sine curve or a cosine curve makes it possible to reduce computational complexity involved in formation of the protruded portion and the recessed portions, and thereby simplify formation of the protruded portion and the recessed portions. If each of the core teeth includes the slit extending circumferentially and penetrating the back yoke portion in the axial direction, with the slit serving as a buffering part, reduction of surface pressure applied to the outer circumferential surface of the back yoke portion by the holding ring is enabled, which makes it possible to further suppress buckling of the core teeth. The radial distance from the reference circle to the protruded portion and the radial distance from the reference circle to each of the recessed portions are set equal to each other in the core tooth, so that adequate balance is achieved between the retaining force of the holding ring for holding the core tooth and a reduction in surface pressure that the opposite ends of the back yoke portion receive from the holding ring. Thus, it is made possible to simultaneously achieve further sustainment of the retaining force for holding the core teeth and further suppression of buckling of the core teeth. If the average value of radial lengths from the axial center of the stator to the outer circumferential surface of the back yoke portion is set equal to the radial length of the reference circle, the balance between the retaining force of the holding ring for holding the core teeth and a reduction in surface pressure received by the opposite ends of the back yoke portion from the holding ring is made more adequate. The protruded portion and each of the recessed portions smoothly formed in the same manner are smoothly connected to each other, whereby it is made possible to still further suppress generation of stress in the core teeth.

### BRIEF DESCRIPTION OF THE DRAWINGS

Fig. 1 is a cross-sectional view showing an electric motor according to one embodiment of the present invention in a state when the electric motor is mounted on a vehicle;
Fig. 2 is a plan view of a stator for the electric motor shown in Fig. 1;
Fig. 3 is a plan view showing one core tooth included in the stator shown in Fig. 2;
Fig. 4 is a plan view showing one core tooth according to a modified embodiment;
Fig. 5 is a schematic view for illustrating a method for forming the shape of the outer circumferential surface of a back yoke portion;
Fig. 6 is a view for illustrating coordinates corresponding to the shape of the outer circumferential surface of the back yoke portion;
Fig. 7 is an enlarged view showing the shape of the outer circumferential surface of the back yoke portion according to the present embodiment in comparison with the corresponding shape of that of the related art;
Fig. 8 is a view showing the distribution of stress that occurs in a core tooth according to the present embodiment;
Fig. 9 is a view showing the distribution of stress generated in a core tooth of that of the related art;
Fig. 10 is a schematic view for illustrating a mechanism of generation of the stress in a core tooth; and
Fig. 11 is a schematic view for illustrating a mechanism of generation of the stress in a core tooth having a slit.

### FORM FOR PRACTICING THE INVENTION

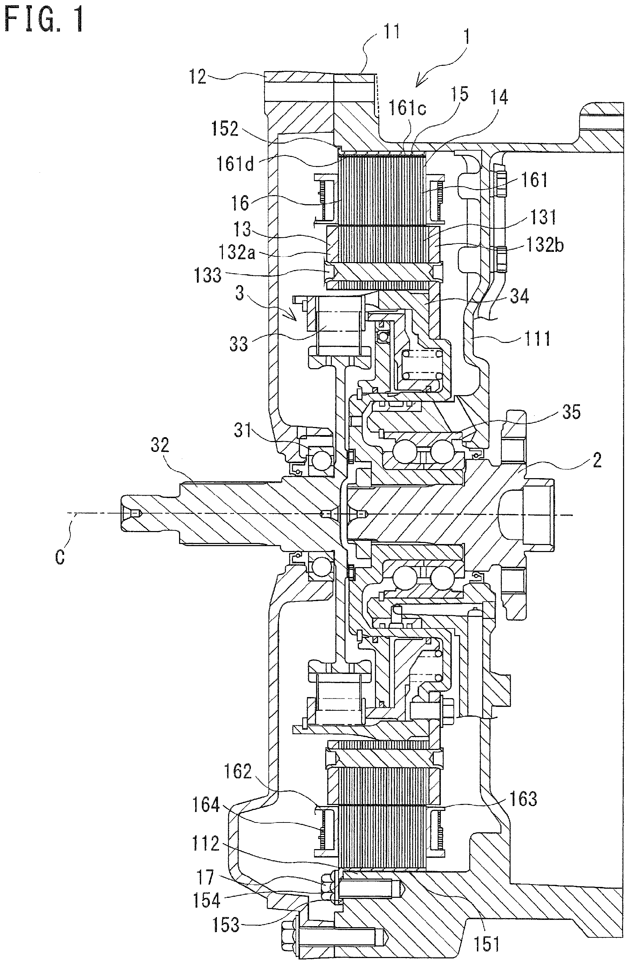

An electric motor 1 according to one embodiment of the present invention is described based on Figs. 1 to 9. The electric motor 1 (which corresponds to a rotary electric machine of the present invention) is a synchronous wheel-driving motor for a hybrid vehicle. However, the present invention should not be limited to this, and is applicable to any electric motors including motors installed in household electric appliances and motors that drive pieces of general industrial machinery.

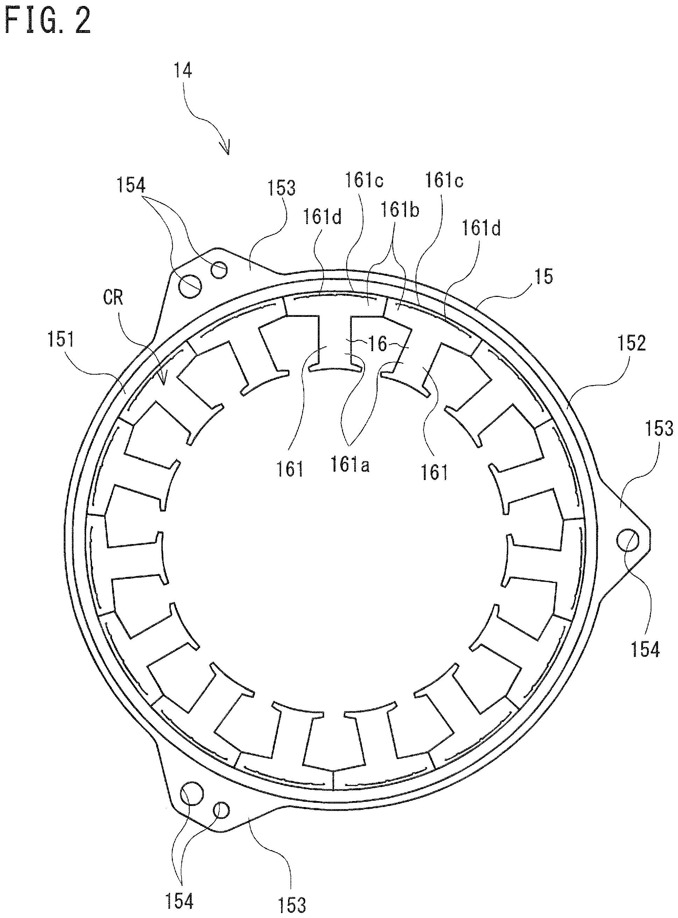

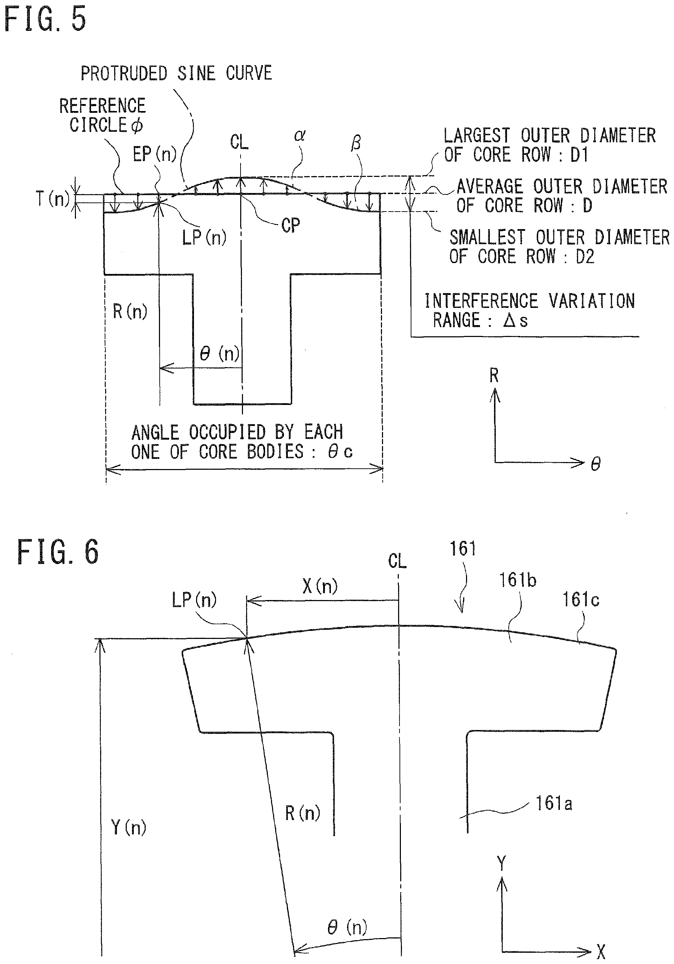

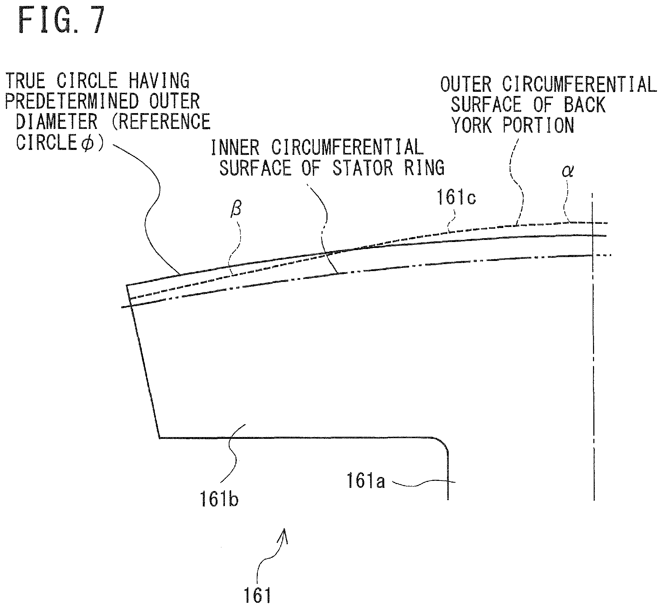

Note that, unless otherwise specified, the rotational axis direction or the axial direction in the description refers to a direction parallel to the rotation axis C of the electric motor 1, i.e., a leftward or rightward direction in Fig. 1. Further, while the description may refer to the left and right sides of Fig. 1 as the front side and the rear side of either the electric motor 1 or a clutch device 3, these directions are irrespective of actual directions with respect to a vehicle. Further, bobbins 162 and 163 of core bodies 16, and coils 164 are not illustrated in Fig. 2. Further, a slit 161d is not illustrated in Figs. 6 and 7.

As shown in Fig. 1, the front side of a motor housing 11 (which corresponds to a housing of the present invention) is sealed up with a motor cover 12 with a rotor 13 and a stator 14 installed inside the motor housing 11. The engine, not shown, of the vehicle is installed in front of the motor cover 12, and a transmission (not shown) is disposed in the rear of the motor housing 11.

Additionally, a normally-closed clutch device 3, which is a multiplate wet clutch, is installed between the rotor 13, included in the electric motor 1, and the engine. Further, the electric motor 1 is connected to driving wheels, not shown, of the vehicle via the transmission, whereby the driving force from the electric motor 1 is input to the driving wheels.

When the vehicle, in which the electric motor 1 shown in Fig. 1 is installed, runs by driving the engine, the engine rotates the driving wheels via the transmission. Further, when the vehicle runs by driving the electric motor 1, the electric motor 1 rotates the driving wheels via the transmission. At this time, the clutch device 3 is released, so that connection between the engine and the electric motor 1 is cancelled. Further, when being driven by the engine via the clutch device 3, the electric motor 1 also functions as a generator.

An input shaft 32 of the clutch device 3 is attached to the inner circumferential end of the motor cover 12 via a bearing 31 so as to be rotatable about the rotation axis C. The rotation axis C agrees with the rotation axes of the engine, the electric motor 1, and a turbine shaft 2 of the transmission. The input shaft 32 is connected to the crank shaft of the engine.

Further, the input shaft 32 is connected to a clutch outer 34 via an engagement portion 33 of the clutch device 3. Engagement and disengagement of the engagement portion 33 cause connection and disconnection between the input shaft 32 and the clutch outer 34.

The clutch outer 34 is coupled to the rotor 13 of the electric motor 1, extends radially inwardly, and has the inner end splined to the turbine shaft 2. Further, a bearing device 35 is installed between the clutch outer 34 and a fixed wall 111 of the motor housing 11 so as to enable relative rotation between the clutch outer 34 and the fixed wall 111.

The rotor 13 of the electric motor 1 is rotatably attached to the motor housing 11 via the clutch outer 34. The rotor 13 is formed in a manner that laminated plural electromagnetic steel plates 131 are held between a pair of holding plates 132a, 132b, fixing members 133 penetrate through the electromagnetic steel plates 131 and the pair of holding plates 132a, 132b and that the end portions of the fixing members 133 are riveted. Further, a plurality of magnets, not shown, forming field poles are provided on the circumference of the rotor 13. The holding plate 132b is attached to the clutch outer 34, whereby the rotor 13 is coupled to the clutch outer 34.

Further, the stator 14 of the electric motor 1 is attached to the inner circumferential surface of the motor housing 11 in a manner radially facing the rotor 13. The stator 14 is formed to have a plurality of core bodies 16 for generating rotating magnetic fields arranged in an annular shape and attached to the inner circumferential surface of a circular cylindrical portion 151 of a stator ring 15 (which corresponds to a holding ring of the present invention) (as shown in Fig. 2).

The stator ring 15 is formed in such a manner that a steel plate is pressed into shapes. As shown in Fig. 2, the stator ring 15 includes the circular cylindrical portion 151 shaped like a ring and an outer circumferential flange 152 connected to one end of the circular cylindrical portion 151 in the axial direction thereof, and extending radially outwardly all over the circumference.

Further, attachment flanges 153 each further extending radially outwardly are formed in three places on the circumference of the outer circumferential flange 152. The attachment flanges 153 are formed for the purpose of attaching the stator 14 to the motor housing 11, and each of the attachment flanges 153 is penetrated by one or a pair of attachment holes 154.

In the stator ring 15, parts on which the circular cylindrical portion 151 is connected to the outer circumferential flange 152 or the attachment flanges 153 are formed into curved surfaces having curvatures of predetermined sizes entirely in the circumferential direction.

On the other hand, each of the core bodies 16 includes a core tooth 161 formed by laminated plural silicon steel plates (electromagnetic steel plates). A pair of bobbins 162 and 163 is mounted on the core tooth 161, and the bobbins 162 and 163 are fitted to each other in a manner surrounding the outer circumferential surface of the core tooth 161. Further, a coil 164 used to generate rotating magnetic fields is wound around the circumferences of the respective bobbins 162 and 163 (shown in Fig. 1). The coil 164 wound around the core body 16 is connected to an external inverter via bus rings not shown.

In the electric motor 1 including the above described configuration, three-phase alternating current, for example, is supplied to the coils 164, whereby rotating magnetic fields are generated in the stator 14. Thus, attractive force or repulsion force caused by the rotating magnetic fields rotates the rotor 13 relative to the stator 14.

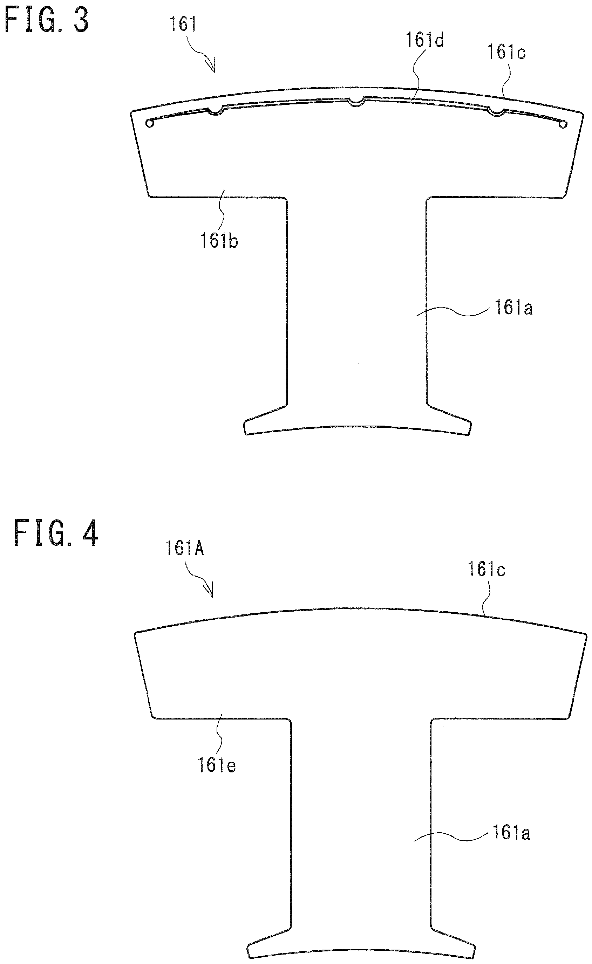

The above described core tooth 161 includes a tooth portion 161a which radially extends when being attached to the stator ring 15, and around which the coil 164 is wound. The core tooth 161 includes a back yoke portion 161b connected to the radially outward side of the tooth portion 161a and extended circumferentially. Each of the core teeth 161 thereby appears substantially T-shaped (as shown in Fig. 3).

As shown in Fig. 2, the plural core teeth 161 attached to the stator ring 15 are annularly arrayed so as to form a core row CR by having ends of the back yoke portions 161b of adjacent ones thereof abutted against each other.

Further, each of the core teeth 161 has, in a part thereof that is a predetermined distance radially inwardly apart from the outer circumferential surface 161c of the corresponding back yoke portion 161b, a slit 161d extending circumferentially (as shown in Fig. 3). Each of the slits 161d penetrates the back yoke portion 161b in the axial direction. The shape of the slit 161d formed in the back yoke portion 161b should not be limited to a shape shown in Fig. 3, and various shapes are applicable as long as the slit 161d extends circumferentially on the back yoke portion 161b.

Further, the core tooth 161 applicable to the stator 14 should not be limited only to one shown in Fig. 3, and a core tooth 161A that does not have the slit 161d formed in the back yoke portion 161e as shown in Fig. 4 may be applied.

The outer circumferential surface 161c of the core tooth 161 or core tooth 161A is not formed into an arc-like shape defined by only one curvature. That is, as shown in Fig. 7, the outer circumferential surface 161c has a protruded portion α at the circumferential center thereof. The protruded portion α smoothly projects radially outwardly from a true circle (hereinafter referred to as the reference circle φ) formed to be located a predetermined distance apart from the axial center of the stator 15. Further, the outer circumferential surface 161c has recessed portions β at the circumferential opposite ends thereof, where the recessed portions β are smoothly recessed radially inwardly from the reference circle φ. The protruded portion α and each of the recessed portions β are smoothly connected to each other. The protruded portion α and the recessed portions β, which are smoothly connected together, are formed by one sine curve (or cosine curve).

Supplementary information on the protruded portion α and the recessed portions β is that, in the outer circumferential surface 161c of the core tooth 161 or 161A, a radial distance from the reference circle φ to the protruded portion α is equal to a radial distance from the reference circle φ to each of the recessed portions β. Further, the average value of radial lengths from the axial center of the stator 14 to the outer circumferential surface 161c of the back yoke portion 161b or 161e is equal to the radial length of the reference circle φ.

Hereinafter, a method for forming the outer circumferential surface 161c of the back yoke portion 161b (hereinafter referred to as the outer circumferential surface 161c) is described based on Figs. 5 and 6.

Fig. 5 is a schematic view representing one of the core teeth 161. CL in Fig. 5 represents a straight line connecting the circumferential center of the outer circumferential surface 161c and the axial center of the stator 14 to each other. When a straight line that connects each position of the outer circumferential surface 161c to the axial center of stator 14 is assumed, the angle θ of this straight line with respect to the straight line CL is represented as a horizontal direction in Fig. 5. Further, a radial distance R from the axial center of the stator 14 to each position of the outer circumferential surface 161c is represented as a vertical direction in Fig. 5 (refer to Fig. 6).

For this reason, the above described reference circle φ is shown being unfolded into a straight line in Fig. 5. Further, the horizontal width of the core tooth 161 in Fig. 5 corresponds to an angle θc (24 degrees in the present embodiment) that is occupied by each one of the core teeth 161 on the circumference of the stator 14.

Preset specifications of the stator 14 include the inner diameter d of the stator ring 15 and the average interference s. The average interference s is set to a value determined in consideration of the retaining force of the stator ring 15 for holding the core teeth 161 and prevention of buckling of the core teeth 161. First, using these values, the average outer diameter D of the core row CR is determined by an equation D = d + s. The average outer diameter D corresponds to the diameter of the above reference circle φ.

Next, using an interference variation range (an interference amplitude) Δs included as a specification of the stator 14, the largest outer diameter D1 and the smallest outer diameter D2 of the core row CR are calculated by equations D1 = D + Δs and D2 = D - Δs, respectively. D = (D1 + D2)/2 is given by these equations. Note that the interference amplitude Δs is set to a value determined in consideration of prevention of buckling of the core teeth 161.

Next, a sine curve or cosine curve that forms the outer circumferential surface 161c is drawn so that a local maximum point and local minimum points of the curve may appear at the circumferential center and the circumferential ends of the outer circumferential surface 161c, respectively. The sine curve or cosine curve formed as the outer circumferential surface 161c is referred to as the protruded sine curve hereinafter. Here, the outer diameter of the core row at the local maximum point of the protruded sine curve is set to the calculated largest outer diameter D1, and the outer diameter of the core row at each of the local minimum points of the protruded sine curve is set to the smallest outer diameter D2.

In order to draw the protruded sine curve, a predetermined number n of calculation points EP (1) to EP (n) are provided at uniform intervals on a straight line indicating the reference circle φ in Fig. 5, from the center of the outer circumferential surface 161c to either of the opposite ends in the circumferential direction (in the range of -θc/2 ≤ θ ≤ θc/2). The following example does not limit the invention but, for example, 12 calculation points EP (n) may be placed at intervals of 1 degree in the plus direction of the horizontal axis and another 12 calculation points EP (n) may be placed at intervals of 1 degree in the minus direction of the horizontal axis.

Next, using the each angle θ(n) to the straight lines CL, values T(n) on the protruded sine curve are calculated for the central point CP and the respective calculation points EP(n) in the circumferential direction on the straight line indicating the reference circle φ, based on an equation T(n) = (Δs/2)·cosθ(n). The values T(n) on the protruded sine curve correspond to half the differences of the center point CP and the respective calculation points EP(n) from the average outer diameter D of the outer circumferential surface 161c.

Finally, radial distances R(n)from the axial center of the stator 14 are calculated for the center point CP and the respective calculation points EP(n) with an equation R(n) = D/2 + T(n), whereby points (hereinafter referred to as locus points LP(n)) on the protruded sine curve that correspond to the center point CP and the respective calculation points EP(n) are identified. Thereafter, the calculated locus points LP(n) are connected to one another by use of a method for drawing a spline curve that uses a CAD system or the like, whereby the outer circumferential surface 161c based on the protruded sine curve is formed. Note that details about the method for drawing a spline curve are described in documents including JP-A-5-290106, which is an unexamined patent publication.

By the above described method, the outer circumferential surface 161c is formed which has the protruded portion α at the circumferential center thereof and also has the recessed portions β at the circumferential opposite ends thereof, and in which the protruded portion α and each of the recessed portions β are smoothly connected to each other (as shown in Fig. 7). The protruded portion α is smoothly protruded radially outwardly and the recessed portions β are smoothly recessed radially inwardly.

In the above described method, the shape of outer circumferential surface 161c is formed based on the angle θ(n) of the respective locus points LP(n) with respect to the straight line CL and the radial distance R(n) thereof from the axial center of the stator 14. However, an alternative manner may be such that, with the core tooth 161 placed in an X-Y coordinate system as shown in Fig. 6, the shape of the outer circumferential surface 161c is formed based on the X- and Y-coordinates of the respective locus points LP(n).

In this case, the X- and Y-coordinates of the respective locus points LP are calculated with equations X(n) = R(n)·sinθ(n) and Y(n) = R(n)·cosθ(n).

As described above, the plurality of core bodies 16 are attached to the inner circumferential surface of the circular cylindrical portion 151 through shrink-fitting. The stator ring 15 in the finished state is heated to a predetermined temperature, so that the inner diameter thereof is expanded. When the circular cylindrical portion 151 has been thus heated, the plurality of core bodies 16 are inserted into the circular cylindrical portion 151 while being arrayed in an annular shape with the back yoke portions 161a of the respective core teeth 161 being abutted against one another.

After the core bodies 16 are inserted in the circular cylindrical portion 151, the stator ring 15 is cooled down and shrinks, thereby being enabled to firmly hold the respective core bodies 16.

Alternatively, press-fitting at room temperature may be applied as a method for attaching the core bodies 16 to the inner side of the stator ring 15. Further, in a case where the core bodies 16 are held by the inner side of the stator ring 15 through press-fitting, an adhesive may be interposed between each of the core bodies 16 and the circular cylindrical portion 151 to increase the retaining force of the stator ring 15 for holding the core bodies 16.

As shown in Fig. 1, the stator ring 15 having the core bodies 16 attached thereto is fixed to the motor housing 11. The attachment flanges 153 are abutted on boss portions 112 of the motor housing 11, and thereafter, attachment bolts 17 are inserted through the respective attachment holes 154 and screwed with the boss portions 112, whereby the attachment flanges 153 are attached to the motor housing 11.

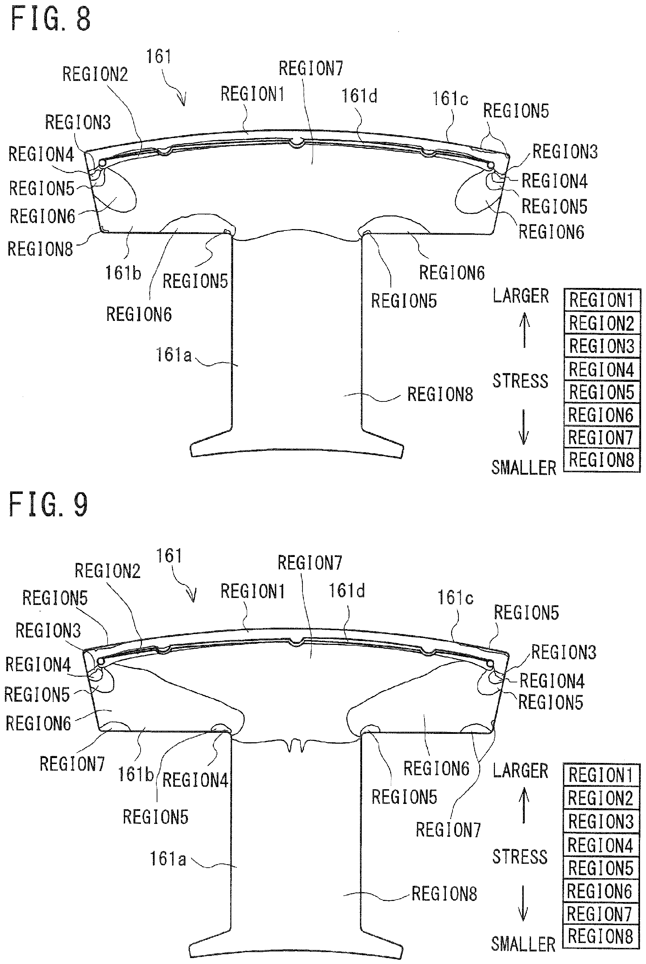

Fig. 8 is a view showing a result of analysis of the distribution of stress generated when the core tooth 161 according to the present embodiment is attached to the stator ring 15 by the finite element method (FEM). On the other hand, Fig. 9 is a view showing the distribution of stress generated in the core tooth 161 in a case that the outer circumferential surface 161c is formed by use of the reference circle φ. In Figs 8 and 9, regions 1 to 8 are segmented one another based on intensities of the stress generated therein, those regions designated by the same reference sign in these drawing represent parts in which stress of the same intensity is generated. That is, for example, it is indicated that stress with the same intensity is generated in the regions 6 in Fig. 8 and the regions 6 in Fig. 9.

In the case that the core tooth 161 that has the outer circumferential surface 161c of the back yoke portion 161b formed by use of the protruded sine curve is attached to the stator ring 15 as shown in Fig. 8, stress generated in the back yoke portion 161b is more uniform than, and compressional stress generated at a juncture portion between the tooth portion 161a and the back yoke portion 161b is extremely smaller than in the case (Fig. 9) that the core tooth 161 that has the outer circumferential surface 161c formed by use of the reference circle φ is used.

According to the present embodiment, the outer circumferential surface 161c of the back yoke portion 161b has the protruded portion α in the circumferential center thereof, and has the recessed portions β in the opposite circumferential ends thereof. The protruded portion α is protruded radially outwardly from the reference circle φ formed to be located a predetermined distance apart from the axial center of the stator 14. The recessed portions β are recessed radially inwardly from the reference circle φ.

Therefore, the magnitudes of surface pressure that the circumferential center of the back yoke portion 161b receives from the stator ring 15 can be sustained and the surface pressure that the opposite ends of the back yoke portion 161b receive from the stator ring 15 can be reduced at the same time. Consequently, moments radially outwardly acting on the opposite ends of the back yoke portion 161b are generated, and this makes it possible to reduce the above described moments radially inwardly acting thereon. This makes it possible to reduce stress in the juncture portions between the back yoke portion 161b and the tooth portion 161a, and thereby prevent buckling of the core tooth 161.

That is, it is made possible to simultaneously achieve sustainment of the retaining force of the stator ring 15 for holding the core teeth 161 and suppression of buckling of the core teeth 161.

Additionally, reduction of stress generated in the core teeth 161 is enabled, which makes it possible to reduce iron loss due to stress in the core teeth 161 and thereby increase the efficiency of the electric motor 1.

Further, the outer circumferential surface of the back yoke portion 161b including the protruded portion α and the recessed portions β enables simplified formation using press-molding or the like, and does not involve increase in number of parts, whereby the electric motor 1 can be produced at low cost.

Further, forming the protruded portion α and the recessed portions β by using a sine curve or a cosine curve makes it possible to reduce computational complexity involved in formation of the protruded portion α and the recessed portions β, and thereby simplify formation of the protruded portion α and the recessed portions β.

Further, each of the core teeth 161 includes the slit 161d extending circumferentially and penetrating the back yoke portion 161b in the axial direction, whereby, with the slit 161d functioning as a buffering part, reduction of surface pressure applied to the outer circumferential surface 161c of the back yoke portion 161b by the stator ring 15 is enabled, which makes it possible to further suppress buckling of the core teeth 161.

Further, the radial distance from the reference circle φ to the protruded portion α and the radial distance from the reference circle φ to each of the recessed portions β are set equal to each other in the core tooth 161, so that adequate balance is achieved between the retaining force of the stator ring 15 for holding the core tooth 161 and a reduction in surface pressure that the opposite ends of the back yoke portion 161b receive from the stator ring 15. Thus, it is made possible to simultaneously achieve further sustainment of the retaining force for holding the core teeth 161 and further suppression of buckling of the core teeth 161.

Furthermore, the average value of radial lengths from the axial center of the stator 14 to the outer circumferential surface 161c of the back yoke portion 161b is set equal to the radial length of the reference circle φ, whereby the balance between the retaining force of the stator ring 15 for holding the core teeth 161 and a reduction in surface pressure received by the opposite ends of the back yoke portion 161b from the stator ring 15 is made further more adequate.

Furthermore, the smoothly formed protruded portion α and recessed portions β are smoothly connected to each other, accordingly, stress generated in the core teeth 161 may be further reduced.

### Other Embodiments:

The present invention is not limited to the above described embodiments and may include an embodiments obtained by modifying or extending the above described embodiments. In an example, not part of the claimed invention, in formation of the outer circumferential surface 161c of the back yoke portion 161b, use of the protruded sine curve is not necessarily required, and the protruded portion α and the recessed portions β may be formed by use of a quadratic curve or the like.

The present invention is applicable not only to core teeth each formed by laminating a plurality of electromagnetic steel plates, but also to core teeth each formed from the magnetic metal powder by pressure-molding.

Further, the electric motor 1 according to the present invention is applicable to any rotary electric machines such as synchronous motors, induction motors, DC motors, and other motors.

### INDUSTRIAL APPLICABILITY

The rotary electric machine and the stator for a rotary electric machine that are defined by the present invention are applicable to four-wheel vehicles such as hybrid cars or electric cars, two-wheel and other vehicles, and home electric machines and pieces of industrial machinery.

### EXPLANATION OF REFERENCE NUMERALS

1; electric motor (rotary electric machine), 11; motor housing (housing), 13; rotor, 14; stator, 15; stator ring (holding ring), 151; circular cylindrical portion, 161, 161A; core tooth, 161a; tooth portion, 161b, 161e; back yoke portion, 161c; outer circumferential surface, 161d; slit, 164; coil, α; protruded portion, β; recessed portion, φ; reference circle.

## Claims

1. A stator (14) for a rotary electric machine (1) comprising:
a holding ring (15) including a circular cylindrical portion (151) and being attachable to a housing; and
a plurality of core teeth (161) each of including: a tooth portion (161a) which radially extends and around which a coil (164) is wound; and a back yoke portion (161b) which is connected to the radially outward side of the tooth portion (161a) and circumferentially extends; the plurality of core teeth (161) being arranged in an annular shape with ends of the back yoke portions (161b) of each adjacent ones thereof abutted against each other, and being attached to an inner circumferential surface of the circular cylindrical portion (151) through press-fitting or shrink-fitting; **characterized in that** the outer circumferential surface (161c) of each of the back yoke portions (161b) includes a protruded portion (α) at the circumferential center thereof and includes recessed portions (β) at the opposite circumferential ends thereof, the protruded portion (α) being protruded radially outwardly from a reference circle (φ) formed to be located a predetermined distance apart from the axial center of the stator (14), the recessed portion (β) being recessed radially inwardly from the reference circle (φ),
wherein the protruded portion (α) and the recessed portions (β) are formed of a sine curve or a cosine curve
wherein, in each of the core teeth (161), a radial distance from the reference circle (φ) to the protruded portion (α) is equal to a radial distance from the reference circle (φ) to each of the recessed portions (β).

2. The stator (14) for a rotary electric machine (1) according to claim 1, wherein, in the outer circumferential surface of the back yoke portion (161b), the protruded portion (α) is smoothly protruded radially outwardly, and each of the recessed portions (β) is smoothly recessed radially inwardly, so that the protruded portion (α) and the recessed portions (β) are smoothly connected to each other.

3. A rotary electric machine (1) comprising:
a rotor (13) rotatably attached to a housing (11); and
a stator (14) according to claim 1 or 2, which is provided in a manner facing the radially outward side of the rotor (13), the holding ring (15) of said stator (14) being attached to the housing (11).

4. The rotary electric machine (1) according to claim 3, wherein each of the core teeth (161) includes a slit (161d) in a part thereof located a predetermined distance radially inwardly apart from the outer circumferential surface of the back yoke portion (161b), the slit (161d) extending circumferentially and penetrating the back yoke portion (161b) in the axial direction.

## Patentansprüche

1. Stator (14) für eine elektrische Rotationsmaschine (1), mit:
einem Haltering (15), welcher einen kreisförmigen zylindrischen Abschnitt (151) aufweist und an dem Gehäuse befestigbar ist; und
einer Vielzahl an Kernzähnen (161), von denen jeder einen Zahnabschnitt (161a), welcher sich radial erstreckt und um den eine Wicklung (164) gewickelt ist; und einen hinteren Querhauptabschnitt (161b) beinhaltet, welcher mit der radial äußeren Seite des Zahnabschnitts (161a) verbunden ist und sich in Umfangsrichtung erstreckt; wobei die Vielzahl an Kernzähnen (161) derart in einer Ringform angeordnet sind, dass Enden der hinteren Querhauptabschnitte (161b) von zueinander benachbarten Kernzähnen aneinander anliegen, und an einer inneren Umfangsoberfläche des kreisförmigen zylindrischen Abschnitts (151) durch Einpressen oder Aufschrumpfen befestigt ist;
**dadurch gekennzeichnet, dass**
die äußere Umfangsoberfläche (161c) von jedem der hinteren Querhauptabschnitte (161b) an deren Umfangsmitte einen vorstehenden Abschnitt (α) beinhaltet und an deren sich gegenüberliegenden Umfangsenden zurückgesetzte Abschnitte (β) beinhaltet, wobei der vorstehende Abschnitt (α) von einem Referenzkreis (φ), welcher ausgebildet ist, um in einem vorbestimmten Abstand von der axialen Mitte des Stators (14) angeordnet zu sein, radial nach außen vorsteht, die zurückgesetzten Abschnitte (β) von dem Referenzkreis (φ) aus radial nach innen zurückgesetzt sind,
wobei der vorstehende Abschnitt (α) und die zurückgesetzten Abschnitte (β) in Form einer Sinuskurve oder einer Kosinuskurve ausgebildet sind,
wobei in jedem der Kernzähne (161) ein Radialabstand von dem Referenzkreis (φ) zu dem vorstehenden Abschnitt (α) gleich zu einem Radialabstand von dem Referenzkreis (φ) zu jedem der zurückgesetzten Abschnitte (β) ist.

2. Stator (14) für eine elektrische Rotationsmaschine (1) gemäß Anspruch 1, wobei in der äußeren Umfangsoberfläche des hinteren Querhauptabschnitts (161b) der vorstehende Abschnitt (α) stufenlos nach radial außen vorsteht und jeder der zurückgesetzten Abschnitte (β) stufenlos nach radial innen zurückgesetzt ist, so dass der vorstehende Abschnitt (α) und die zurückgesetzten Abschnitte (β) stufenlos miteinander verbunden sind.

3. Elektrische Rotationsmaschine (1), mit:
einem Rotor (13), der rotierbar an einem Gehäuse (11) befestigt ist; und
einem Stator (14) gemäß Anspruch 1 oder 2, welcher in einer der radial äußeren Seite des Rotors (13) zugewandten Weise vorgesehen ist, wobei der Haltering (15) des besagten Stators (14) an dem Gehäuse (11) befestigt ist.

4. Elektrische Rotationsmaschine (1) gemäß Anspruch 3, wobei jeder der Kernzähne (161) in einem Teil von sich einen Schlitz (161d) aufweist, der in einem vorbestimmten Abstand von der äußeren Umfangsoberfläche des hinteren Querhauptabschnitts (161b) radial nach innen angeordnet ist, wobei sich der Schlitz (161d) in Umfangsrichtung erstreckt und den hinteren Querhauptabschnitt (161b) in der Axialrichtung durchdringt.

## Revendications

1. Stator (14) pour une machine électrique rotative (1) comprenant :
un anneau de retenue (15) incluant une portion cylindrique circulaire (151) et pouvant être attaché à un boîtier ; et
plusieurs dents de noyau (161) comprenant chacune : une portion de dent (161a) qui s'étend radialement et autour de laquelle une bobine (164) est enroulée ; et une portion d'arceau arrière (161b) qui est connectée au côté radialement vers l'extérieur de la portion de dent (161a) et s'étend circonférentiellement ; les plusieurs dents de noyau (161) étant disposées dans une forme annulaire avec des extrémités des portions d'arceaux arrière (161b) adjacentes de celles-ci adossées les unes contre les autres, et étant attachées à une surface circonférentielle interne de la portion cylindrique circulaire (151) par un raccord de compression ou un raccord de contraction ;
**caractérisé en ce que**
la surface circonférentielle externe (161c) de chacune des portions d'arceaux arrière (161b) comprend une portion en saillie (α) sur le centre circonférentiel de celle-ci et comprend des portions en creux (β) sur les extrémités circonférentielles opposées de celles-ci, la portion en saillie (α) étant en saillie radialement vers l'extérieur à partir d'un cercle de référence (φ) formé pour être disposé à une distance prédéterminée éloignée de l'axe central du stator (14), la portion en creux (β) étant en creux radialement vers l'intérieur à partir du cercle de référence (φ),
où la portion en saillie (α) et les portions en creux (β) sont constituées d'une courbe de sinus ou d'une courbe de cosinus
où, dans chacune des dents de noyau (161), une distance radiale à partir du cercle de référence (φ) jusqu'à la portion en saillie (α) est égale à une distance radiale à partir du cercle de référence (φ) jusqu'à chacune des portions en creux (β).

2. Stator (14) pour une machine électrique rotative (1) selon la revendication 1, où, dans la surface circonférentielle externe de la portion d'arceau arrière (161b), la portion en saillie (α) est régulièrement en saillie radialement vers l'extérieur, et chacune des portions en creux (β) est régulièrement en creux radialement vers l'intérieur, de sorte que la portion en saillie (α) et les portions en creux (β) sont régulièrement connectées les unes aux autres.

3. Machine électrique rotative (1) comprenant :
un rotor (13) attaché de manière rotative à un boîtier (11) ; et
un stator (14) selon la revendication 1 ou 2, lequel est fourni dans une manière faisant face au côté radialement vers l'extérieur du rotor (13), l'anneau de retenue (15) dudit stator (14) étant attaché au boîtier (11).

4. Machine électrique rotative (1) selon la revendication 3, où chacune des dents de noyau (161) comprend une fente (161d) dans une partie de celles-ci disposée à une distance prédéterminée radialement vers l'intérieur à distance de la surface circonférentielle externe de la portion d'arceau arrière (161b), la fente (161d) s'étendant circonférentiellement et pénétrant dans la portion d'arceau arrière (161b) dans la direction axiale.
